# FASCICULE DE BREVET EUROPEEN

(11) **EP 0 723 947 B1**
(45) Date de publication et mention de la délivrance du brevet: **04.08.1999**
(21) Numéro de dépôt: 96400134.1
(22) Date de dépôt: 19.01.1996
(51) Int. Cl.: C04B 41/60, C23F 13/00

(54) **Procédé de régénération et de protection du béton armé**
Verfahren zur Regenerierung und Schutz von bewehrtem Beton
Process for the regeneration and protection of reinforced concrete

(30) Priorité: 24.01.1995 FR 9500998
(43) Date de publication de la demande: 31.07.1996
(73) Titulaire: FREYSSINET INTERNATIONAL (STUP), F-78140 Velizy Villacoublay (FR); BETOREC, 75116 Paris (FR)
(72) Inventeur: Guerin, Richard, F-69600 Oullins (FR)
(74) Mandataire: Burbaud, Eric

(56) Documents cités:
- EP-A- 0 398 117
- EP-A- 0 568 025
- EP-A- 0 614 860
- WO-A-93/12052
- WO-A-94/29496
- NL-A- 7 608 443
- DATABASE WPI Week 8801 Derwent Publications Ltd., London, GB; AN 88-003638 XP002002460 & JP-A-62 267 485 (NAKAGAWA BOSHOKU)
- DATABASE WPI Week 9328 Derwent Publications Ltd., London, GB; AN 93-224193 XP002002461 & JP-A-05 148 061 (DENKI KAGAKU KOGYO KK)

## Description

La présente invention est relative aux procédés de régénération et de protection du béton armé.

Le béton constitue normalement un milieu alcalin qui protège ses armatures métalliques contre la corrosion.

Toutefois, en vieillissant, le béton subit parfois des dégradations qui lui font perdre ses qualités protectrices des armatures : ces armatures risquent alors de se corroder, ce qui entraîne une diminution de la résistance mécanique du béton, et finalement la ruine de l'ouvrage réalisé avec ce béton.

Ces dégradations du béton peuvent notamment avoir pour origine :
- une baisse du pH du béton, due par exemple à une carbonatation par absorption de dioxyde de carbone,
- une attaque sulfatique par absorption d'oxydes de soufre,
- une pénétration de polluants agressifs tels que des ions chlorure, en général du fait du salage des routes en hiver ou du fait des embruns marins,
- ou encore une réaction alcali-granulats, qui fait fortement gonfler certains granulats en présence d'eau et en milieu basique, ce qui entraîne une forte fissuration du béton permettant à son tour une corrosion rapide des aciers.

Lorsque le béton a subi ou risque de subir de telles dégradations, il est nécessaire de lui redonner des qualités propres à empêcher l'oxydation des armatures.

Pour cela, plusieurs solutions sont connues dans l'art antérieur, et notamment :
- les traitements mécaniques consistant en un piquage du béton dégradé suivi d'un ragréage ou similaire, éventuellement après un traitement des armatures métalliques ; mais ces traitements mécaniques ne sont pas toujours efficaces, et de plus, ils sont coûteux en main-d'oeuvre ;
- et les procédés électrochimiques qui consistent à connecter une source extérieure de courant entre d'une part les armatures du béton et d'autre part une électrode extérieure en contact avec un milieu électrolytique qui est appliqué à la surface du béton, ce qui permet sélectivement d'augmenter ou de diminuer le pH du béton autour des armatures, selon les polarités respectives des armatures et de l'électrode extérieure (voir par exemple les documents WO-A-87/06 521 et FR-A-2 642 064) ; mais ces procédés sont difficiles à mettre en oeuvre aux endroits qui ne sont pas desservis par le réseau électrique public, puisqu'ils impliquent alors en général de maintenir en fonctionnement un groupe électrogène pendant toute la durée du traitement électrochimique ; de plus, ces procédés électrochimiques sont souvent en eux-mêmes agressifs pour le béton ou les armatures (notamment : risque de piqûre des armatures), du fait que les courants électriques qui circulent entre l'électrode extérieure et les armatures du béton sont particulièrement importants.

Par ailleurs, le document WO-A-94/29496 décrit un procédé de protection cathodique utilisant des électrodes sacrificielles qui sont raccordées aux armatures d'un ouvrage en béton et qui sont en contact avec une solution électrolytique basique

La présente invention a notamment pour but de pallier ces inconvénients, en proposant un procédé de régénération et de protection du béton armé qui soit efficace, non agressif et facile à mettre en oeuvre.

A cet effet, le procédé selon l'invention consiste à :
- appliquer contre la surface extérieure de l'ouvrage une réserve de solution électrolytique basique propre à migrer au sein du béton jusqu'à rencontrer l'eau interstitielle contenue dans ce béton, en générant ainsi un courant osmotique de diffusion entre la réserve de solution électrolytique et l'eau interstitielle du béton,
- raccorder une liaison électriquement conductrice entre d'une part au moins certaines armatures du béton et d'autre part une électrode extérieure disposée au contact de la réserve de solution électrolytique, cette liaison conductrice n'étant connectée à aucune source de courant extérieure, et l'électrode extérieure étant formée en un matériau d'électropositivité différente des armatures du béton, de sorte qu'un courant électrique circule spontanément dans la liaison conductrice susmentionnée,
- puis, après une durée de traitement déterminée, enlever la réserve de solution électrolytique et l'électrode extérieure.

Du fait qu'il n'implique pas la présence d'une source électrique extérieure, le procédé selon l'invention peut être mis en oeuvre de façon autonome et sans intervention humaine, ce qui permet une grande facilité de mise en oeuvre et ce qui autorise un traitement du béton en douceur sur une durée importante, sans circulation de courants électriques excessifs entre l'électrode extérieure et les armatures du béton.

L'efficacité du procédé selon l'invention est assurée par la conjonction de trois phénomènes :
a) le courant électrique qui est généré spontanément entre l'électrode extérieure et les armatures du béton est dû à des réactions d'oxydo-réduction qui impliquent :
   . soit une réaction de réduction des armatures et une augmentation simultanée du pH du béton autour des armatures si l'électrode extérieure est plus électropositive que les armatures,
   . soit une diminution du pH autour des armatures si l'électrode extérieure est moins électropositive que les armatures, ce qui peut être utile en particulier si le pH initial du béton est trop élevé et risque d'engendrer des désordres (de type réaction alcali-granulats par exemple) ;
b) lorsque la solution électrolytique présente un pH supérieur au pH du béton, un front riche en ions OH⁻ avance vers l'intérieur du béton à partir de la solution électrolytique, front qui contribue à augmenter le pH du béton et forme ensuite une protection vis-à-vis du dioxyde de carbone ; au contraire, lorsque la solution électrolytique présente un pH inférieur au pH du béton, les ions OH⁻contenus dans le béton se déplacent par diffusion osmotique vers la réserve de solution électrolytique, ce qui contribue à diminuer le pH du béton dans le cas où le pH initial du béton est trop élevé et risque d'engendrer des désordres (de type réaction alcali-granulats par exemple);
c) et le cas échéant, les polluants tels que les ions chlorure contenus dans le béton se déplacent par diffusion osmotique vers la réserve de solution électrolytique.

Le procédé selon l'invention met donc en oeuvre d'une part un courant électrique et d'autre part un courant de diffusion osmotique qui est le phénomène prédominant.

Dans des modes de réalisation préférés, on a recours en outre à l'une et/ou à l'autre des dispositions suivantes :
- le matériau constituant l'électrode extérieure est choisi pour que la tension électrique entre cette électrode extérieure et les armatures du béton soit inférieure à 2,3 volts ;
- l'électrode extérieure est formée en un métal plus électropositif que les armatures du béton ;
- les armatures du béton sont en acier et l'électrode extérieure est à base d'aluminium ou de magnésium ;
- l'électrode extérieure est en contact avec la réserve de solution électrolytique sur une surface qui est très supérieure à la surface extérieure des armatures auxquelles elle est raccordée ;
- la solution électrolytique présente un pH supérieur à 9,5 ;
- le béton est potentiellement réactif vis-à-vis des réactions alcali-granulats, et la solution électrolytique est à base de lait de chaux ;
- la solution électrolytique contient un produit hydrophile ;
- la solution électrolytique contient un produit mouillant ;
- le procédé comporte une étape préliminaire qui consiste à projeter sous haute pression, sur la surface extérieure de l'ouvrage, un mélange d'eau et de produit mouillant ou un mélange d'eau et de la solution électrolytique ;
- la liaison conductrice qui raccorde l'électrode extérieure aux armatures du béton présente une électropositivité qui est comprise inclusivement entre l'électropositivité des armatures et l'électropositivité de l'électrode extérieure,
- la solution électrolytique est contenue dans un caisson qui présente une face ouverte appliquée de façon étanche contre la surface extérieure de l'ouvrage,
- la solution électrolytique est imprégnée dans une pâte collante qui est projetée sur la surface extérieure de l'ouvrage et qui constitue ladite réserve de solution électrolytique,
- la pâte collante comprend au moins un mélange de fibres de cellulose, de poudre de craie et, le cas échéant, de poudre de bentonite,
- le procédé est utilisé pour éliminer des polluants agressifs contenus dans le béton.

D'autres caractéristiques et avantages de l'invention apparaîtront au cours de la description suivante de deux de ses formes de réalisation, données à titre d'exemples non limitatifs, en regard des dessins joints.

Sur les dessins :
- la figure 1 est une vue schématique en coupe qui illustre une première forme de réalisation de l'invention,
- et la figure 2 est une vue similaire à la figure 1, pour une deuxième forme de réalisation de l'invention.

Sur les dessins, les mêmes références désignent des éléments identiques ou similaires.

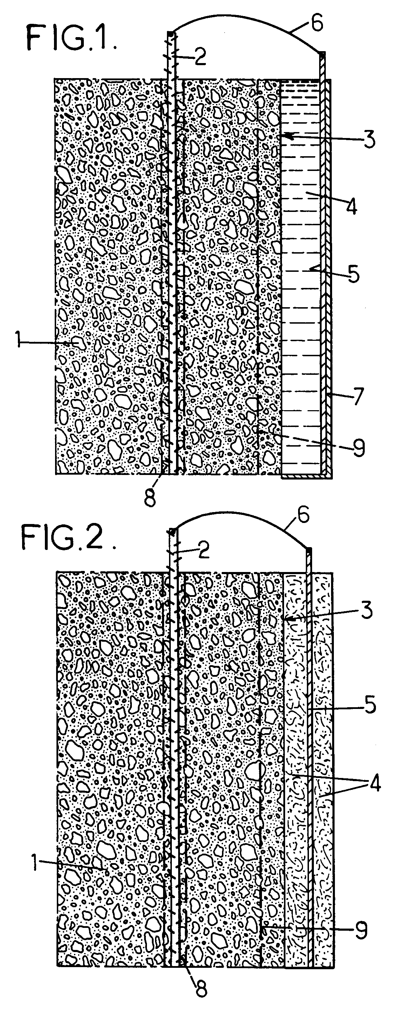

Comme représenté sur la figure 1, pour régénérer un ouvrage 1 en béton qui contient des armatures 2 en acier, on procède comme suit :
- on sable d'abord la surface extérieure 3 de cet ouvrage et/ou on projette sur elle de l'eau à haute pression (200 bars), cette eau étant éventuellement mélangée avec de la solution électrolytique basique décrite ci-après et/ou avec un produit mouillant tel que décrit ci-après,
- puis on applique sur la surface extérieure 3 une réserve 4 de solution électrolytique basique qui est en contact avec une électrode 5 formée en un métal présentant une électropositivité différente des armatures 2, de sorte que l'ensemble constitué par les armatures 2, le béton, la solution électrolytique, et l'électrode 5 constitue une pile électrolytique,
- et on raccorde l'électrode 5 aux armatures 2 par l'intermédiaire d'un fil électrique 6.

Le fil 6 est de préférence réalisé en un matériau dont l'électropositivité est comprise entre l'électropositivité de l'électrode 5 et l'électropositivité des armatures 2, ce qui inclut le matériau de l'électrode 5 et le matériau des armatures 2 : on évite ainsi que le fil 6 ne participe aux réactions d'oxydo-réduction au contact du béton ou de la solution électrolytique.

La solution électrolytique et l'électrode 5 peuvent être contenues dans un coffrage ou caisson 7 qui présente une face ouverte appliquée de façon étanche sur la surface 3 du béton.

En ce qui concerne l'électrode 5, celle-ci peut se présenter sous la forme d'une feuille de métal, ou encore sous la forme de tresses, de bandes, de réseaux de fils, de grillages, de grilles ou autres.

Cette électrode peut être réalisée par exemple en magnésium, en aluminium, en manganèse, en zinc, en fer (si l'acier constitutif des armatures 2 présente une électropositivité suffisamment différente de celle du fer), en cuivre ou en argent.

De préférence, le matériau de l'électrode 5 est choisi pour que la tension électrique existant entre l'électrode 5 et les armatures 2 soit inférieure à 2,3 volts. En effet, on a pu constater qu'au-delà de 2,3 volts, les armatures 2 risquent d'être détériorées par un phénomène de piqûre.

Par ailleurs, la surface de l'électrode 5 qui est en contact avec la réserve 4 de solution électrolytique est de préférence très supérieure à la surface extérieure des armatures 2 auxquelles elle est raccordée (par exemple plus de 10 fois supérieure), de sorte que la tension électrique entre cette électrode et les armatures 2 ne décroît quasiment pas pendant la mise en oeuvre du procédé.

En ce qui concerne la solution électrolytique, celle-ci peut être une solution aqueuse de soude NaOH ou une solution aqueuse de chaux CaOH.

Si le béton est potentiellement réactif vis-à-vis des réactions alcali-granulats (ce qui est en général révélé par un examen du béton au microscope électronique à balayage ou par un examen du béton en microscope optique sur lame mince), la solution électrolytique sera de préférence du lait de chaux.

De plus, la solution électrolytique contient de préférence un produit mouillant.

Ce produit mouillant peut être un surfactant (détergent), par exemple le surfactant à base de phosphate commercialisé sous la marque "P 90" par la société COATEX, 35 rue Ampère, 69730 GENAY (FRANCE), ou encore un alcool, par exemple de l'alcool méthylique.

Par ailleurs, la solution électrolytique peut contenir en outre un agent hydrophile tel que de la glycérine, afin d'éviter ou de limiter l'évaporation de la solution électrolytique, notamment lorsque le procédé doit être mis en oeuvre dans les pays chauds ou lorsqu'il doit être mis en oeuvre pendant une durée prolongée pour protéger durablement le béton contre la carbonatation.

La solution électrolytique peut être sous forme liquide, mais elle peut également être imprégnée dans un matériau poreux tel que du sable, de la soiure ou du carton, ou encore elle peut être épaissie pour former un gel, notamment par adjonction de méthylcellulose.

Les dispositions qui viennent d'être décrites peuvent, suivant le cas, servir soit à augmenter le pH du béton, ce qui est en général le but recherché, soit à diminuer ce pH dans le cas où il est trop élevé.

Tout d'abord, lorsqu'il est nécessaire de relever le pH du béton, on choisit en général le pH de la solution électrolytique à une valeur supérieure à 9,5 (limite au-dessus de laquelle l'acier est en environnement passivant), cette valeur pouvant même aller au-delà de 12, notamment si le béton n'est pas du tout réactif vis-à-vis des réactions alcali-granulats.

Toujours dans le cas où l'on souhaite augmenter le pH du béton, l'électrode extérieure 5 sera réalisée en un matériau plus électropositif que l'acier, par exemple en aluminium ou éventuellement en magnésium (dans les deux cas, la tension entre l'électrode 5 et les armatures 2 ne dépasse pas en pratique la valeur de 2,3 volts).

Dans ce cas de figure, lors de la mise en oeuvre du procédé, l'électrode en aluminium est progressivement oxydée avec dégagement d'hydrogène tandis que les armatures 2 en acier sont réduites, avec dégagement d'oxygène et avec création d'une zone annulaire 8 riche en ions OH⁻ autour de chaque armature.

De plus, du fait de la pénétration de la solution électrolytique au sein du béton, une couche 9 riche en ions OH⁻ se crée au voisinage de la surface 3 du béton et avance vers l'intérieur du béton, tandis que les polluants éventuels contenus dans le béton migrent par diffusion osmotique vers la réserve 4 de solution électrolytique.

Lorsqu'au contraire, on souhaite abaisser le pH du béton, le pH de la solution électrolytique basique est choisi à une valeur inférieure à la valeur initiale du pH du béton, et par ailleurs, le matériau constituant l'électrode 5 est un matériau moins électropositif que l'acier, c'est-à-dire moins réducteur que l'acier, ce matériau pouvant être par exemple de l'argent. Il y a alors abaissement du pH au voisinage des armatures 2 du fait du passage du courant électrique, et également abaissement du pH au voisinage de la surface 3 du béton par diffusion osmotique des ions OH⁻depuis le béton vers la réserve 4 de solution électrolytique.

Le procédé qui vient d'être décrit peut être mis en oeuvre pendant une ou plusieurs périodes successives ayant chacune une durée de deux à six semaines.

Par la suite, on procède en général à un lavage du béton par projection d'eau sous haute pression après enlèvement de la réserve 4 de solution électrolytique et du fil 6. Après quelques jours de séchage, on peut alors appliquer une protection par peinture ou par un liant souple, cette protection étant prévue pour empêcher la pénétration d'eau et d'ions nocifs dans le béton.

La deuxième forme de réalisation de l'invention, dont la mise en oeuvre est schématisée sur la figure 2, diffère de la première forme de réalisation de l'invention uniquement par le fait que la réserve 4 de solution électrolytique est constituée par une pâte sensiblement collante.

Cette pâte peut consister par exemple en un mélange de fibres de cellulose, de poudre de craie et le cas échéant de poudre de bentonite, ce mélange étant imprégné à saturation avec la solution électrolytique liquide décrite ci-dessus.

A titre d'exemple on peut utiliser dans cette pâte la fibre de cellulose commercialisée sous la marque "ARBO-CEL" par la société OMIA, 35 quai André Citroën, 75015 PARIS (fabricant : société JRS), la poudre de craie commercialisée sous la marque "OMIA ROUGE" par la société OMIA susmentionnée et la bentonite de sodium commercialisée par la SOCIETE FRANCAISE DE BENTONITE INDUSTRIELLE ET DERIVES, 101 boulevard Haussmann, 75008 PARIS.

On peut d'abord projeter une première couche de cette pâte collante sur la surface 3 du béton, après lavage de ladite surface par projection d'eau sous haute pression, puis on plaque l'électrode 5 sur cette première couche, cette électrode consistant par exemple en une grille, et enfin on projette une deuxième couche de la pâte sur l'électrode 5.

## Revendications

1. Procédé de régénération et de protection d'un ouvrage (1) en béton qui comprend des armatures métalliques (2), ce procédé consistant à :
- appliquer contre la surface extérieure de l'ouvrage une réserve (4) de solution électrolytique basique propre à migrer au sein du béton jusqu'à rencontrer l'eau interstitielle contenue dans ce béton, en générant ainsi un courant osmotique de diffusion entre la réserve (4) de solution électrolytique et l'eau interstitielle du béton,
- raccorder une liaison (6) électriquement conductrice entre d'une part au moins certaines armatures (2) du béton et d'autre part une électrode extérieure (5) disposée au contact de la réserve (4) de solution électrolytique, cette liaison conductrice n'étant connectée à aucune source de courant extérieure, et l'électrode extérieure (5) étant formée en un matériau d'électropositivité différente des armatures (2) du béton, de sorte qu'un courant électrique circule spontanément dans la liaison conductrice (6) susmentionnée,
- puis, après une durée de traitement déterminée, enlever la réserve (4) de solution êlectrolytique et l'électrode extérieure (5).

2. Procédé selon la revendication 1, dans lequel le matériau constituant l'électrode extérieure (5) est choisi pour que la tension électrique entre cette électrode extérieure et les armatures du béton soit inférieure à 2,3 volts.

3. Procédé selon l'une quelconque des revendications précédentes, dans lequel l'électrode extérieure est formée en un métal plus électropositif que les armatures du béton.

4. Procédé selon la revendication 3, dans lequel les armatures du béton sont en acier et l'électrode extérieure est à base d'aluminium ou de magnésium.

5. Procédé selon l'une quelconque des revendications précédentes, dans lequel l'électrode extérieure (5) est en contact avec la réserve (4) de solution électrolytique sur une surface qui est très supérieure à la surface extérieure des armatures auxquelles elle est raccordée.

6. Procédé selon l'une quelconque des revendications précédentes, dans lequel la solution électrolytique présente un pH supérieur à 9,5.

7. Procédé selon l'une quelconque des revendications précédentes, dans lequel le béton est potentiellement réactif vis-à-vis des réactions alcali-granulats, et dans lequel la solution électrolytique est à base de lait de chaux.

8. Procédé selon l'une quelconque des revendications précédentes, dans lequel la solution électrolytique contient un produit hydrophile.

9. Procédé selon l'une quelconque des revendications précédentes, dans lequel la solution électrolytique contient un produit mouillant.

10. Procédé selon l'une quelconque des revendications précédentes, comportant en outre une étape préliminaire qui consiste à projeter sous haute pression, sur la surface extérieure (3) de l'ouvrage, un mélange d'eau et de produit mouillant ou un mélange d'eau et de la solution électrolytique.

11. Procédé selon l'une quelconque des revendications précédentes, dans lequel la liaison conductrice (6) qui raccorde l'électrode extérieure aux armatures (2) du béton présente une électropositivité qui est comprise inclusivement entre l'électropositivité des armatures et l'électropositivité de l'électrode extérieure.

12. Procédé selon l'une quelconque des revendications précédentes, dans lequel la solution électrolytique est contenue dans un caisson (7) qui présente une face ouverte appliquée de façon étanche contre la surface extérieure (3) de l'ouvrage.

13. Procédé selon l'une quelconque des revendications 1 à 11, dans lequel la solution électrolytique est imprégnée dans une pâte collante qui est projetée sur la surface extérieure (3) de l'ouvrage et qui constitue la dite réserve (4) de solution électrolytique.

14. Procédé selon la revendication 13, dans lequel la pâte collante comprend au moins un mélange de fibres de cellulose, de poudre de craie et, le cas échéant, de poudre de bentonite.

15. Utilisation d'un procédé selon l'une quelconque des revendications précédentes, pour éliminer des polluants agressifs contenus dans le béton.

## Claims

1. A process for the regeneration and protection of a concrete structure (1) comprising metal reinforcements (2), said process consisting in:
- applying to the outer surface of the structure a reserve (4) of basic electrolytic solution adapted to migrate to within the concrete until it meets the interstitial water contained in said concrete, thus generating an osmotic current of diffusion between the reserve (4) of electrolytic solution and the interstitial water in the concrete,
- connecting an electrically conductive connection (6) between, on the one hand, at least some reinforcements (2) of the concrete and, on the other hand, an outer electrode (5) disposed in contact with the reserve (4) of electrolytic solution, said conductive connection not being connected to any external current source, and the outer electrode (5) being formed from a material having a different electropositivity from the concrete reinforcements (2) so that an electric current flows spontaneously in the said conductive connection (6),
- then, after a determined period of treatment, removing the reserve (4) of electrolytic solution and the outer electrode (5).

2. A process according to claim 1, wherein the material forming the outer electrode (5) is so selected that the voltage between said outer electrode and the concrete reinforcements is less than 2.3 volts.

3. A process according to any of the preceding claims, wherein the outer electrode is formed from a metal which is more electropositive than the concrete reinforcements.

4. A process according to claim 3, wherein the concrete reinforcements are made of steel and the outer electrode is aluminium or magnesium based.

5. A process according to any one of the preceding claims, wherein the outer electrode (5) is in contact with the reserve (4) of electrolytic solution on a surface which is very much larger than the outer surface of the reinforcements to which it is connected.

6. A process according to any one of the preceding claims, wherein the electrolytic solution has a pH above 9.5.

7. A process according to any one of the preceding claims, wherein the concrete is potentially reactive with respect to alkali-granulate reactions and wherein the electrolytic solution is based on milk of lime.

8. A process according to any one of the preceding claims, wherein the electrolytic solution contains a hydrophilic product.

9. A process according to any one of the preceding claims, wherein the electrolytic solution contains a wetting agent.

10. A process according to any one of the preceding claims, also comprising a preliminary step consisting in spraying at high pressure, on the outer surface (3) of the structure, a mixture of water and wetting agent or a mixture of water and the electrolytic solution.

11. A process according to any one of the preceding claims, wherein the conductive connection (6) which connects the outer electrode to the concrete reinforcements (2) has an electropositivity which lies inclusively between the electropositivity of the reinforcements and the electropositivity of the outer electrode.

12. A process according to any one of the preceding claims, wherein the electrolytic solution is contained in a caisson (7) which has an open surface applied sealingly against the outer surface (3) of the structure.

13. A process according to any one of claims 1 to 11, wherein the electrolytic solution is impregnated in a sticky paste which is sprayed on the outer surface (3) of the structure and which constitutes the said reserve (4) of electrolytic solution.

14. A process according to claim 13, wherein the sticky paste comprises at least one mixture of cellulose flbres, chalk powder and, where applicable, bentonite powder.

15. Use of a process according to any one of the preceding claims to eliminate aggressive pollutants contained in the concrete.

## Patentansprüche

1. Verfahren zum Regenerieren und Schützen eines Mauerwerkes (1) aus Beton mit metallischen Bewehrungen (2), bestehend aus:
- Anlegen gegen die Außenfläche des Mauerwerkes eines Vorrats (4) einer basischen elektrolytischen Lösung, die dazu geeignet ist, in das Innere des Betons abzuwandern, bis sie auf das im Beton enthaltene Porenwasser trifft, und somit einen osmotischen Diffusionsstrom zwischen dem Vorrat (4) an elektrolytischer Lösung und dem Porenwasser des Betons zu erzeugen,
- Anschließen einer elektrisch leitenden Verbindung (6) zwischen einerseits zumindest bestimmten der Bewehrungen (2) des Betons und andererseits einer externen Elektrode (5), die in Kontakt mit dem Vorrat (4) an elektrolytischer Lösung angeordnet ist, wobei diese leitende Verbindung an keinerlei äußere Stromquelle angeschlossen ist, und die externe Elektrode (5) aus einem Material mit einer Elektropositivität ausgebildet ist, die von derjenigen der Bewehrungen (2) des Betons verschieden ist, so daß ein elektrischer Strom spontan in der genannten leitenden Verbindung (6) fließt,
- daraufhin, nach einer vorgegebenen Behandlungsdauer, Entfernen des Vorrats (4) an elektrolytischer Lösung und der externen Elektrode (5).

2. Verfahren nach Anspruch 1, bei dem das die externe Elektrode (5) bildende Material derart gewählt wird, daß die elektrische Spannung zwischen dieser externen Elektrode und den Betonbewehrungen weniger als 2,3 Volt beträgt.

3. Verfahren nach einem der vorhergehenden Ansprüche, bei dem die externe Elektrode aus einem Metall mit einer Elektropositivität ausgebildet ist, die höher als diejenige der Betonbewehrungen ist.

4. Verfahren nach Anspruch 3, bei dem die Betonbewehrungen aus Stahl und die externe Elektrode auf Aluminium- oder Magnesiumbasis hergestellt sind.

5. Verfahren nach einem der vorhergehenden Ansprüche, bei dem die externe Elektrode (5) mit dem Vorrat (4) an elektrolytischer Lösung über eine Oberfläche in Verbindung steht, die weit größer als die Außenfläche der Bewehrungen ist, an die sie angeschlossen ist.

6. Verfahren nach einem der vorhergehenden Ansprüche, bei dem die elektrolytische Lösung einen pH-Wert von mehr als 9,5 aufweist.

7. Verfahren nach einem der vorhergehenden Ansprüche, bei dem der Beton im Hinblick auf Alkali/Zuschlagstoffe-Reaktionen potentiell reaktionsfähig ist, und bei dem die elektrolytische Lösung auf der Basis von Kalkmilch ist.

8. Verfahren nach einem der vorhergehenden Ansprüche, bei dem die elektrolytische Lösung ein hydrophiles Produkt enthält.

9. Verfahren nach einem der vorhergehenden Ansprüche, bei dem die elektrolytische Lösung ein benetzendes Produkt enthält.

10. Verfahren nach einem der vorhergehenden Ansprüche, welches des weiteren einen vorausgehenden Schritt aufweist, der darin besteht, eine Mischung aus Wasser und benetzendem Produkt bzw. eine Mischung aus Wasser und der elektrolytischen Lösung unter Hochdruck auf die Außenfläche (3) des Mauerwerkes aufzuspritzen.

11. Verfahren nach einem der vorhergehenden Ansprüche, bei dem die leitende Verbindung (6) für den Anschluß der externen Elektrode an die Bewehrungen (2) des Betons eine Elektropositivität aufweist, die zwischen einschließlich der Elektropositivität der Bewehrungen und der Elektropositivität der externen Elektrode liegt.

12. Verfahren nach einem der vorhergehenden Ansprüche, bei dem die elektrolytische Lösung in einem Kasten (7) enthalten ist, der eine dichtend an die Außenfläche (3) des Mauerwerkes angelegte offene Seite aufweist.

13. Verfahren nach einem der Ansprüche 1 bis 11, bei dem die elektrolytische Lösung in eine Klebepaste imprägniert ist, die auf die Außenfläche (3) des Mauerwerkes aufgespritzt wird und den genannten Vorrat (4) an elektrolytischer Lösung darstellt.

14. Verfahren nach Anspruch 13, bei dem die Klebepaste mindestens eine Mischung aus Cellulosefasern, Kreidepulver und gegebenenfalls Bentonitpulver aufweist.

15. Verwendung eines Verfahrens nach einem der vorhergehenden Ansprüche zum Eliminieren der in dem Beton enthaltenen aggressiven Schadstoffe.
